# EUROPEAN PATENT APPLICATION

(11) **EP 0 610 856 A1**
(43) Date of publication of application: **17.08.1994**
(21) Application number: 94101822.8
(22) Date of filing: 07.02.1994
(51) Int. Cl.: G06F 11/14

(54) **Error recovery mechanism for software visible registers in computer systems**

(30) Priority: 08.02.1993 JP 19784/93
(71) Applicant: NEC CORPORATION, Tokyo (JP)
(72) Inventor: Date, Yuuki, Koufu-shi, Yamanashi (JP)
(74) Representative: VOSSIUS & PARTNER

(57) **Abstract**

A CPU is so structured as to include a CSVR which stores, the same contents as a software visible register (SVR) of one cycle earlier. Upon occurrence of an error in a calculation unit, an error flag is activated. At the same time, data at the time of error occurrence are written into the SVR. The activation of the error flag inhibits writing into the CSVR. In this case, the instruction which was being executed when the error occurred is restarted by restoring the contents of the CSVR into the SVR. On the other hand, if an error is detected in the CSVR, the instruction is restarted with the contents of the SVR restored to the SVR. Error processing is accomplished under the control of a diagnostic processor. By setting the mode flag appropriately, an instruction is given as to whether firmware for the generation of the timing of control shift to the diagnostic processor is to be gone through or not.

## Description

The present invention relates to an error recovery mechanism for use in computer systems, and more particularly to an error recovery mechanism for software visible registers in computer systems.

In a computer system, in the event of fault in its central processing unit (CPU), if data affected by the fault are written into a software visible register (SVR), it will become difficult to restart the instruction whose execution was interrupted by the fault, because writing the fault-affected data into the SVR invites the loss of the necessary data for restart by overwrite.

Although it is theoretically possible to preventing fault-affected data into the SVR, this in practice would require the gathering of error occurrence signals from different parts of the CPU and the prevention of fault-affected data from being written into the SVR, and this processing takes time. Especially, latest computer systems are operating under high-speed clocks, which makes it even more difficult to inhibit writing into the SVR.

A "Fault Recovery Mechanism, Transparent to Digital System Function" is disclosed in the U.S. Patent No. 4,996,687, granted to Richard F. Hess et al. on February 26, 1991. This mechanism, intended for recovery from soft errors in the main memory RAM connected to the CPU via a bus, has a configuration having a backup RAM having the same contents as the main memory, so that the contents of this backup RAM can be restored to the main memory in the event of fault.

This prior art, however, is incapable of timely back-up of the state in the CPU. Therefore, it involves the problem of being unable to cone with a case in which, for instance, wrong data have been overwritten into the SVR on account of an error having occurred in the arithmetic unit

An object of the present invention is to obviate the aforementioned problem and to provide an error recovery mechanism for realizing a computer system highly resistant to fault, capable of restarting the instruction which was being processed when the fault occurred even when wrong data have been overwritten into the SVR on account of an error having occurred in the calculation unit.

In one of its preferred embodiments, the invention provides an error recovery mechanism for use in computer systems, each having a central processing unit (CPU) including a set of registers each consisting of at least one word. The error recovery mechanism includes a set of backup registers which have the same configuration as the CPU's set of registers and into which, after the time data are written into the CPU's set of registers, the same data are written. The error recovery mechanism further includes error detection means for detecting any error having occurred in the CPU, and error processing means responsive to an error notice from the error detection means for processing the error in the CPU and restoring the CPU.

The above-mentioned and other objects, features and advantages of the present invention will become more apparent from the following detailed description when taken in conjunction with the accompanying drawings, wherein:
FIG. 1 is a block diagram illustrating an error recovery mechanism for describing a preferred embodiment of the invention;
FIG. 2 is a block diagram of the CPU firmware,
FIG. 3 is a diagram showing the format of the micro-instruction of the CPU firmware;
FIG. 4 is a diagram showing the timings from the time an error occurs until it is processed;
FIG. 5 is a flow chart of the steps of processing until the CPU firmware calls up the diagnostic processor for error processing; and
FIG. 6 is a flow chart of error processing in the diagnostic processor.

A preferred embodiment of the present invention will be described in detail below with reference to drawings.

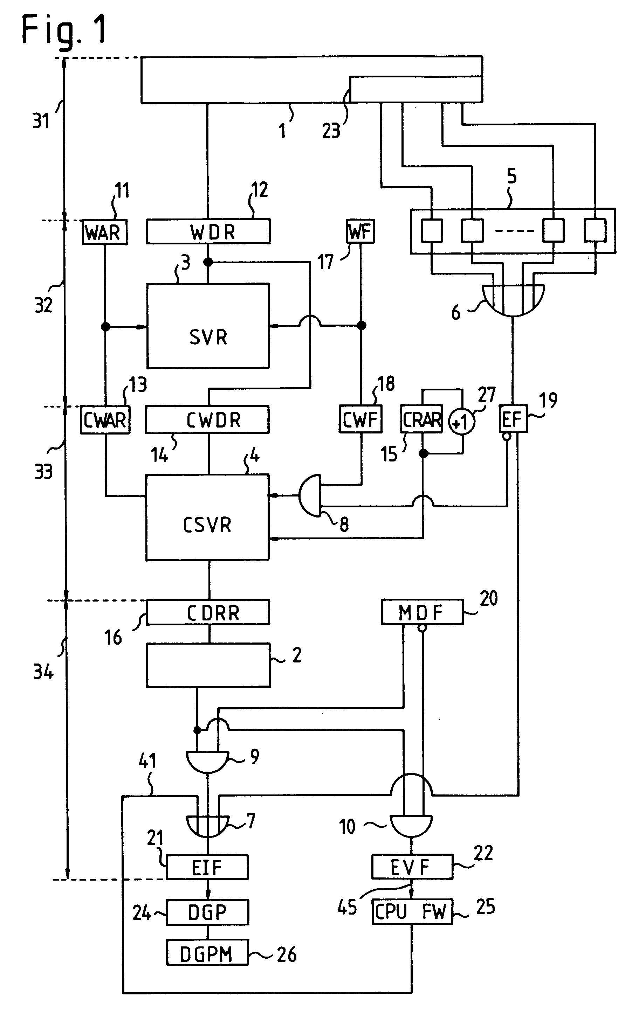

Referring to FIG. 1, a computer system to which the invention is applicable comprises a calculation stage 31 for performing calculation, a write stage 32 for writing the result of calculation into a SVR 3, a copy stage 33 for writing the result of calculation into a copied SVR (CSVR) 4, and an error check stage 34 for checking the occurrence of errors.

In the calculation stage 31, a calculation circuit 31 performs calculation. According to the result of this calculation, an error detection circuit 23 determines whether any fault has occurred in the calculation circuit 1.

In the write stage 32, the result of calculation by the calculation circuit 1 is written into the SVR 3. The SVR 3, which is a register provided for software, usually has a configuration to have a plurality of words each consisting of a plurality of bytes. Accordingly, the write stage 32 includes a write data register (WDR) 12 for holding the result or calculation supplied from the calculation circuit 1, a write address register (WAR) 11 for holding a write address from the SVR 3, and a write flag (WF) 17 for instructing the SVR 3 to write. Error information detected by the error detection circuit 23 is held by error detected flags 5, each responsible for a different part of the calculator. The write stage 32 includes an OR circuit 6 to detect the indication of error occurrence by one of the error information pieces held by the error detected flags 5.

In the copy stage 33 is provided the CSVR 4 for backing up the SVR 3, and the result of calculation by the calculation circuit 1 is written into the CSVR 4. This CSVR 4 has the same configuration as the SVR 3. Accordingly, the copy stage 33 includes a copied write data register (CWDR) 14 for holding the value of the WDR 12 delayed by one clock, a copied write address register (CWAR) 13 for holding the write address for the CSVR 4, and a copied write flag (CWF) 18 for instructing the CSVR 4 to write. It further includes an error flag (EF) 19 for holding error information collected by the OR circuit 6. Still further it includes a copied read address register (CRAR) 15 for holding the read address when reading out of the CSVR 4 for the purpose of detecting any error having occurred in the CSVR 4, add an increment circuit 27 for incrementing this CRAR 15.

In the error check stage 34, there is provided an error detection circuit 2 for detecting the occurrence of any error in the CSVR 4, and checking to start error processing is accomplished, using information from the EF 19 as well. Accordingly the error check stage 34 includes a copied data read register (CDRR) 16 for holding data read out from the CSVR 4. It further includes, as will be described in more detail below, a mode flag (MDF) 20 for switching the error processing between start via the firmware and direct start by the hardware. Still further it includes an event flag (EVF) 22 indicating the start of error processing via the firmward, and an error indicating flag (EIF) 21 indicating the start of error processing for a diagnostic processor (DGP) 24. This DGP 24, which is a processor for diagnosing the computer system, has a diagnostic processor memory (DGPM) 26 for its exclusive use.

Although the computer system is supposed to be controlled by the firmware of a CPU-firmware (CPU-FW) 25 in this preferred embodiment, it may as well be controlled by a hard-wired logic.

In the above-described configuration, the result of calculation by the calculation circuit 1 in the calculation stage 31 is written into the SVR 3 via the WDR 12. As the address of the write destination in the SVR 3 at this time, what is held by the WAR 11 is used. The timing of this writing is given by the WF 17. These WAR 11 and WF 17 are set in accordance with an instruction for the data to be written. The result of calculation is written into the CSVR 4 by the CWDR 14 at the clock next to its writing into the SVR 3. As the address of the write destination in the CSVR 4 at this time, what is hold by the CWAR 13 is used. The timing of this writing is given by the CWF 18. Thus, the CSVR 4 holds the same stage of the SVR 3 one clock earlier.

In the event that an error arises in the calculation circuit 1, the error is detected by the error detection circuit 23 in the calculation stage 31, and a corresponding one among the error detected flags 5 is activated. The logical sum of all the bits in the error detected flags 5 is generated by the OR circuit 6 to activate the EF 19. In this case, the result of calculation regarding the error is written into the SVR 3 but not into the CSVR 4. This is realized by using the negative logic of the EF 19 as the input to an AND circuit 8 which instructs writing into the CSVR 4. Thus, as the EF 19 is activated, its negative logic is made non-active, so that the output of the AND circuit 8 is made non-active irrespective of the value of the CWF 18. Therefore, in the event of error occurrence in the calculation circuit 1, the stage immediately after the error occurrence is held in the SVR 3, while that immediately before the error occurrence is held in the CSVR 4.

In the event that an error arises in the CSVR 4, the error is detected by the error detection circuit 2 of the error check stage 34. This error in the CSVR 4 is detected in the following manner. Whereas write data from the CWDR 14 are written into the CSVR 4, data for error detection are read into the CDRR 16 along with that. This reading into the CDRR 16 is accomplished according to the address indicated by the CRAR 15. This CRAR 15 is incremented by the increment circuit 27 at every clock to indicate each word in its due order. When this CRAR 15, after circulatory incrementation, indicates the final word, it will indicate the first word at the next clock. The error detection circuit 2 detests the occurrence of any error in the data read out into the CDRR 16 by parity check or any other appropriate method.

In the error check stage 34, error processing is started in the following manner according to information from the error detection circuit 2 or the EF 19. First, if an error is detected by the error detection circuit 2, that event is inputted to one each of the input terminals of AND circuits 9 and 10. On the other hand, a signal based on the MDF 20 is inputted to the other input terminals of these AND circuits to achieve control so that the output of only one of these AND circuits be made active. Thus, the output of the error detection circuit 2 will be supplied by the AND circuit 9 if the MDF 20 is "1", or by the AND circuit 10 if the MDF 20 is "0". Accordingly, upon detection of any error by the error detection circuit 2, the EIF 21 is set if the MDF 20 is "1", or the EVF 22 is set if the MDF 20 is "0".

If the EIF 21 is set, the DGP 24 will start error processing. Or if the EVF 22 is set, the EIF 21 will be set after the timing for error processing start is generated by the CPU-FW 25, and the DGP 24 will start error processing in the same way as stated above. The difference between the EIF 21 setting and the EVF 22 setting influences the timing of the start of error processing as described below. If the DGP 24 is directly informed of an error by the EIF 21, error processing can be immediately started. At the same time, however, the timing may be such as to interrupt the processing of an instruction, and in that case the restart of the instruction after the occurrence of the error may be made difficult. On the other hand, where error processing is to be accomplished from the EVF 22 via the CPU-FW 25, since error processing can be started after the completion of the instruction being processed, the probability is higher for successful restart of the instruction. Therefore, the choice of the starting method for error processing out of these alternatives should be determined according to the circumstances of the computer system, and this embodiment provides the MDF 20 for setting the starting method. This MDF 20 can be set at the time of system initialization by scan pass, for instance.

If an error in the calculation unit is reported from the EF 19, the EIF 21 is set via an OR circuit 7. This starts error processing by the DGP 24. Although the error occurrence report from the EF 19 goes to the EIF 21 in this embodiment, it may as well go via the firmware depending on the mode as in the case of an error reported from the error detection circuit 2.

Next will be described the processing by the CPU-FW 25 with reference to drawings.

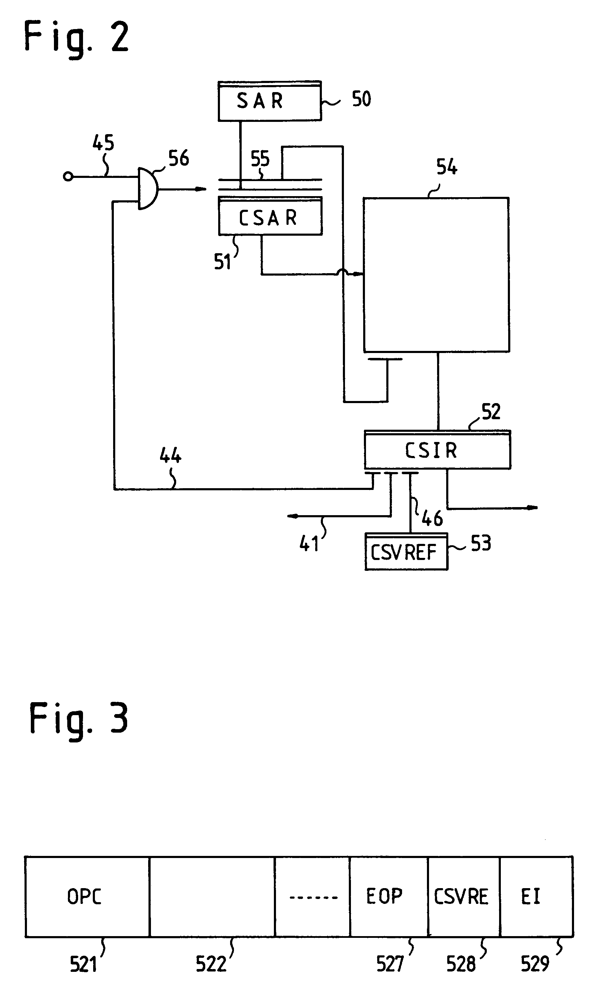

Referring to FIG. 2, the CPU-FW 25 comprises a control store 54 for storing a micro-program, a control store address register (CSAR) 51 for instructing the read position in the control store 54, and a control store instruction register (CSIR) 52 for holding data read out from the control store 54. It further includes a start address register (SAR) 50 for holding the start address of the error processing routine of the micro-program, a selector 55 for selecting this SAR 50 or the next address, and an AND circuit 56 for providing a control signal to this selector 55. The "next address" refers to an address designated by the micro-program of the control store 54, and generally means the address of the micro-program instruction to be executed next to the micro-program instruction currently being processed. Signals are transferred to signal lines 41, 44 and 46 in accordance with the micro-program instruction read out to the CSIR 52.

Referring now to FIG. 3, the instruction field of the micro-program stored in the control store 54 and read out to the CSIR 52 comprises OPC 521 indicating the micro-instruction code, NEXT 522 indicating the next address, EOP 527 indicating the completion of instruction at the machine instruction level, CSVRE 528 for setting the occurrence of an error in the CSVR 5 in a CSVREF 53, and EI 529 for setting the error occurrence in EIF 21. NEXT 522 is entered as one of the inputs to the selector 55. EOP 527 is transferred to the signal line 44, and the AND circuit 56 takes the logical product of EOP 527 and the output 45 of the EVF 22. CSVRE 528 is used for setting the CSVREF 53 via the signal line 46. EI 529 is entered into the OR circuit 7 via the signal line 41, and used for setting EIF 21.

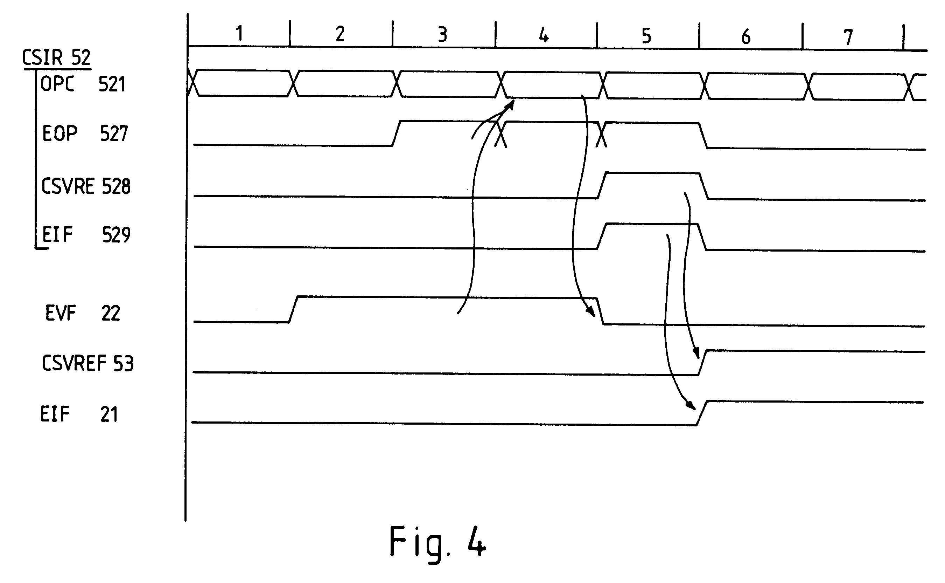

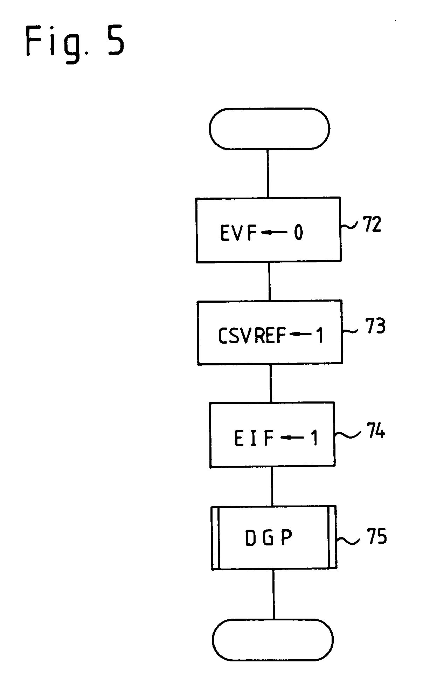

Next will be described, with reference to FIGS. 4 and 5, an example of operation in said CPU-FW 25 when an error in the CSVR 4 is detected by the error detection circuit 2.

Referring to FIG. 4, an error detected by the error detection circuit 2 in the first cycle is reported to the EVF 22. This serves to activate the output of the EVF 22 in the next second cycle. However, as the EOP 527 is non-active in this second cycle, i.e. an instruction at the machine instruction level is being processed, the start of interrupt processing is obliged to wait.

In the third cycle, as EOP 527 is activated and it becomes known that the instruction at the machine instruction level will be completed, error processing will start in the next fourth cycle to let the output of the AND circuit 56 select the SAR 50 by the selector 55.

Referring now to FIG. 5, at the beginning of the error processing sequence in the CPU-FW 25, the EVF 22 is reset (step 72) to be readied for receiving the next error report. This resetting of the EVF 22 is instructed in the fourth cycle, and the output of the EVF 22 is made non-active in the next fifth cycle.

Then the CSVREF 53, indicating the occurrence of an error in the CSVR 4, is set (step 73), and so is the EIF 21 to start the DGP 24 (step 74). These setting steps are simultaneously instructed in the fifth cycle, and both are activated in the sixth cycle. The activation of the EIF 21 causes error processing to start in the DGP 24 (step 75).

Next will be described the sequence of error processing in the DGP 24.

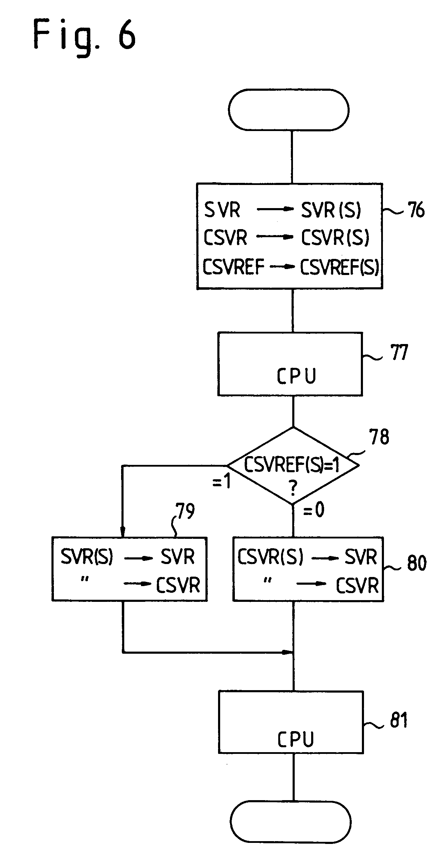

Referring to FIG. 6, first the DGP 24 saves the contents of the SVR 3, CSVR 7 and CSVREF 53 into the DGPM 26 (step 76). This saving can be accomplished by, for instance, scan pass. If the error is reported directly to the DGP 24 without going via the CPU-FW 25, the DGP 24 checks the CDRR 16 to detect the error in the CSVR 4. Thereafter, the error in the CSVR 4 detected in this manner is also treated as having been saved as CSVREF. The DGP 24 once resets the CPU after this saving (step 77).

After the resetting of the CPU, if the value of CSVREF saved into the DGPM 26 is "1", which indicates the occurrence of an error in the CSVR 4, the contents of the SVR 3 saved into the DGPM 26 are restored to the SVR 3 and CSVR 4 (step 79). Or if the value of CSVREF saved into the DGPM 26 is "0", which indicates the occurrence of no error in the CSVR 4, the contents of the CSVR 4 saves into the DGPM 26 are restored to the SVR 3 and CSVR 4 (step 80). After the completion of these restoring steps, the CPU is restarted by the instruction which was being processed at the time of error occurrence (step 81).

As is evident from the foregoing description, the present invention, by providing a CSVR for storing the same state of the SVR one clock earlier, makes it possible to restart the instruction which was being processed at the time of error occurrence even if an error within the CPU causes wrong data to be overwritten into the SVR, and to maintain high resistance especially against intermittent faults.

## Claims

1. An error recovery mechanism for use in computer systems, each having a central processing unit (CPU) including a set of registers each consisting of at least one word, comprising:
a set of backup registers which have the same configuration as said set of registers and into which, after the time data are written into said set of registers, the same data are written;
error detection means for detecting any error having occurred in said CPU; and
error processing means responsive to an error notice from said error detection means for processing the error in said CPU and restoring said CPU.

2. An error recovery mechanism, as claimed in Claim 1, wherein said error processing means further includes:
an error processing for analyzing the cause of the error in said CPU, resetting said CPU after saving the contents of said set of registers and said set of backup registers into save areas, and restoring the contents of said save areas to said set of registers and said set of backup registers.

3. An error recovery mechanism, as claimed in Claim 2, wherein said error processing moans further includes:
error processing firmware for performing preparation for error processing for the error reported from said error detection means, generating a suitable timing for error recovery, and having said error processor start error processing at the timing so generated.

4. An error recovery mechanism, as claimed in Claim 3, wherein said error detection means includes:
a backup register error detecting section for detecting any error occurring in any of said backup registers;
said error processing means includes:
a backup register error flag indicating the occurrence or an error in said backup register error detecting section; and
when said error processor is to restore the contents of said saving areas to said set of registers and said set of backup registers, if said backup register error flag indicates "error occurrence", the contents of said saving areas regarding said set of registers are restored to said set of registers and said set of backup registers, or if said backup register error flag indicates "error non-occurrence", the contents of said saving areas regarding said set of backup registers are restored to said set of registers and said set of backup registers.

5. An error recovery mechanism, as claimed in Claim 3, wherein said error detection means further includes:
an error processing mode flag designating either a mode to directly notify said error processor of the error detected by said error detecting means or a mode to start said error processor via said error processing firmware.

6. An error recovery mechanism, as claimed in Claim 5, wherein said error detection means includes:
a backup register error detecting section for detecting any error occurring in any of said backup registers;
said error processing means includes:
a backup register error flag indicating the occurrence of an error in said backup register error detecting section; and
when said error processor is to restore the contents of said saving areas to said set of registers and said set of backup registers, if said backup register error flag indicates "error occurrence", the contents of said saving areas regarding said set of registers are restored to said set of registers and said set of backup registers, or if said backup register error flag indicates "error non-occurrence", the contents of said saving areas regarding said set of backup registers are restored to said set of registers and said set of backup registers.
